# EUROPEAN PATENT APPLICATION

(11) **EP 4 668 896 A1**
(43) Date of publication of application: **24.12.2025**
(21) Application number: 24773755.4
(22) Date of filing: 05.01.2024
(51) Int. Cl.: H04W 52/02

(54) **BASE STATION CONTROL METHOD, ELECTRONIC DEVICE, AND COMPUTER-READABLE STORAGE MEDIUM**

(30) Priority: 22.03.2023 CN 202310355470
(71) Applicant: ZTE CORPORATION, Shenzhen, Guangdong 518057 (CN)
(72) Inventor: SU, Jinhui, Shenzhen, Guangdong 518057 (CN)
(74) Representative: Canzler & Bergmeier Patentanwälte Partnerschaft mbB
(86) International application number: PCT/CN2024/070745
(87) International publication number: WO 2024/193185

(57) **Abstract**

The present application provides a base station control method, an electronic device, and a computer-readable storage medium. The base station control method comprises: in response to meeting energy-saving conditions, closing a remote radio unit in an active antenna unit in a base station, and putting a multi-mode baseband processing unit in the active antenna unit in an energy-saving mode, wherein after the multi-mode baseband processing unit is put in the energy-saving mode, only a first module, required for ensuring normal communication between an indoor baseband processing unit and the active antenna unit, in the multi-mode baseband processing unit is loaded.

## Description

### CROSS-REFERENCE TO RELATED APPLICATIONS

This application claims priority from Chinese patent application No. 202310355470.9 filed on March 22, 2023, the entirety of which is incorporated herein by reference.

### TECHNICAL FIELD

Embodiments of the present application relate to the technical field of communications, and particularly relate to a method for controlling a base station, an electronic device, and a computer-readable storage medium.

### BACKGROUND

Currently, energy saving of a base station based on the 5th generation mobile communication technology (5G) includes station-level energy saving and network-level energy saving. The station-level energy saving includes deep sleep, cell shutdown, symbol shutdown, channel shutdown, power optimization, and the like; the network-level energy saving involves predicting a network load based on performance indexes of all communication cells within a certain area, determining cells available for energy saving and an energy-saving policy therefor based on network quality of the area, and performing energy saving on the cells available for energy saving by combining a station-level energy saving means. With the steady development of 5G network construction, implementing the energy saving and emission reduction of 5G base stations can not only help to save investment cost in operation, but also provide an important driving force for green upgrade of products in the communication industry.

The related energy-saving scheme of deep sleep has a poor energy-saving effect.

### SUMMARY

In a first aspect, an embodiment of the present application provides a method for controlling a base station, including: shutting down, in response to a condition for energy-saving being satisfied, a remote radio unit in an active antenna unit in the base station, and controlling a multi-mode baseband unit in the active antenna unit to enter into an energy-saving mode, so that, after the multi-mode baseband unit enters the energy-saving mode, only a first module, for ensuring a normal communication between a building baseband unit and the active antenna unit, in the multi-mode baseband unit is loaded.

In a second aspect, an embodiment of the present application provides an electronic device, including: at least one processor; and a memory having at least one computer program stored thereon, the at least one computer program, when executed by the at least one processor, causes the at least one processor to implement the method for controlling the base station as described above.

In a third aspect, an embodiment of the present application provides a computer-readable storage medium having a computer program stored thereon, the computer program, when executed by a processor, causes the processor to implement the method for controlling the base station as described above.

### BRIEF DESCRIPTION OF DRAWINGS

FIG. 1 is a flowchart of a method for controlling a base station according to an embodiment of the present application; and
FIG. 2 is a block diagram of an electronic device according to an embodiment of the present application.

### DETAIL DESCRIPTION OF EMBODIMENTS

To improve understanding of the technical solution of the present application for those skilled in the art, the method for controlling the base station, the electronic device, and the computer-readable storage medium according to the present application will be described below in detail in conjunction with the accompanying drawings.

Exemplary embodiments will be described more sufficiently below with reference to the accompanying drawings, but may be embodied in different forms and should not be construed as limited to the embodiments set forth herein. These embodiments are provided so that the present application will be more thorough and complete, and will fully convey the scope of the present application to those skilled in the art.

The embodiments of the present application and features thereof may be combined with each other as long as they are not contradictory.

As used herein, the term "and/or" includes any and all combinations of at least one associated listed item.

The terminology used herein is for the purpose of describing specific embodiments only and is not intended to limit the present application. As used herein, the singular forms "a", "an" and "the" are intended to include the plural forms as well, unless the context clearly indicates otherwise. It will be further understood that as used herein, the terms "comprise" and/or "consist of ..." specify the presence of the stated features, integers, steps, operations, elements, and/or components, but do not preclude the presence or addition of at least one other feature, integer, step, operation, element, component, and/or group thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present application, and will not be interpreted in an idealized or overly formal sense unless expressly so defined herein.

The existing energy saving technology for a base station includes equipment-level energy saving, station-level energy saving, and network-level energy saving. The equipment-level energy saving mainly realizes energy saving through hardware design. The station-level energy saving mainly includes identifying a network state, to realize refined energy saving by timely shutting down some devices, cells, channels or power amplifiers, and the like, from the aspect of software energy saving on the premise of ensuring network quality and experience at a terminal, for example, by means of deep sleep, cell shutdown, symbol shutdown, channel shutdown, power optimization, and the like. The network-level energy saving realizes the purpose of energy saving from the aspect of multi-network coordination, and is based on a main idea of determining configuration parameters of a network for energy saving through a corresponding intelligent algorithm by utilizing service information of a current network, to realize software energy saving for a cell. The intelligent algorithm here may be used not only for an initialization of configuration of a parameter of the cell, but also for a prediction of services based on historical data of services of the cell, thereby adjusting an energy-saving policy for the cell.

In places such as shopping malls, campuses, hospitals, parks, office buildings, subway stations, bus stations, railway stations and the like, where there are morning and evening rush hours and a tidal phenomenon, and users are increased rapidly in the daytime, but fewer or even no users are present late at night, a huge waste of electric energy is caused during the base station in no load operation, which is not consistent with the benefits of operators, and goes against the low-carbon economic trend of global energy saving and emission reduction. Therefore, the current fact of the base station operating round-the-clock without energy saving is unacceptable for operators, and for this reason, the operators have written expectations for energy saving and consumption reduction into system specifications for the base station, for system suppliers for the base station providing various energy saving policies suitable for different scenarios. For a place with a base station having the tidal phenomenon, when there is no user or fewer users, all or part of serving cells and devices with high energy consumption in the base station may be shut down to realize the purposes of energy saving and consumption reduction, so that the competitiveness of the base station is improved, the operation cost of the telecommunication operator is reduced, and a beneficial contribution is made to energy saving and emission reduction.

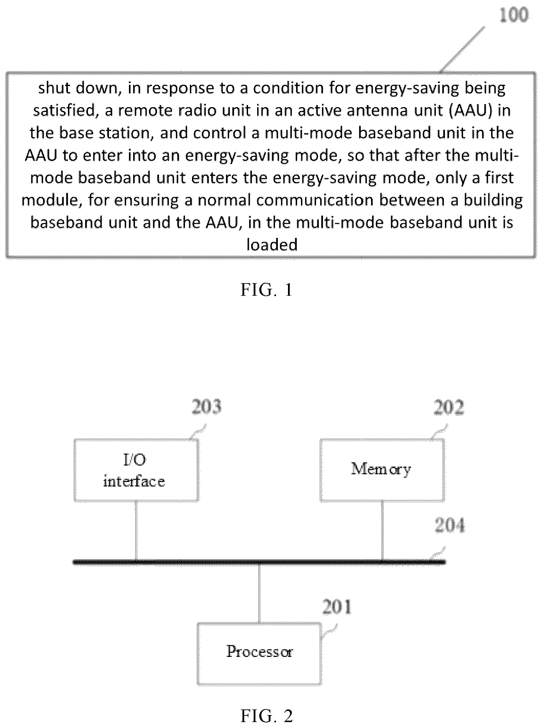

FIG. 1 is a flowchart of a method for controlling a base station according to an embodiment of the present application.

In a first aspect, referring to FIG. 1, an embodiment of the present application provides a method for controlling a base station, including the following operation 100.

At operation 100, shutting down, in response to a condition for energy-saving being satisfied, a remote radio unit in an active antenna unit (AAU) in the base station, and controlling a multi-mode baseband unit in the AAU to enter into an energy-saving mode, so that after the multi-mode baseband unit enters the energy-saving mode, only a first module, for ensuring a normal communication between a building baseband unit and the AAU, in the multi-mode baseband unit is loaded.

In some implementations, after the multi-mode baseband unit enters the energy-saving mode, a second module other than the first module in the multi-mode baseband unit is not loaded.

In some implementations, after controlling the multi-mode baseband unit in the AAU to enter into the energy-saving mode, the method further includes: controlling, in response to an operating condition being satisfied, the multi-mode baseband unit to enter into an operating mode, so that after the multi-mode baseband unit enters the operating mode, all modules in the multi-mode baseband unit are loaded.

In some implementations, the multi-mode baseband unit may be a multi-mode baseband chip.

In some implementations, based on operating characteristics of the multi-mode baseband unit, operating modes of the multi-mode baseband unit are divided into two modes, i.e., an energy-saving mode and an operating mode.

In some implementations, the multi-mode baseband unit enters the operating mode in response to a service being present. For example, the operating condition includes: a current traffic volume of the base station being greater than or equal to a first preset threshold.

In some implementations, the multi-mode baseband unit enters the energy-saving mode in response to no service being present. For example, the condition for energy-saving includes: a current traffic volume of the base station being less than or equal to a second preset threshold.

In some implementations, during the multi-mode baseband unit being in the operating mode, the multi-mode baseband unit can perform processing tasks in a physical layer and some accelerated processing tasks of L2/L3 in hardware.

In some implementations, during the multi-mode baseband unit being in the energy-saving mode, only an optical interface module, and a network transport layer (NTL) accelerator in network layer accelerators, in the multi-mode baseband unit operate. However, a normal operation of the NTL accelerator in the network layer accelerators expects a cooperation of a clock reset management (CRM) subsystem, and therefore, the clock reset management (CRM) subsystem is to be in an operating state during the multi-mode baseband unit being in the energy-saving mode.

In the embodiment of the present application, the normal communication between the AAU and the BBU can be implemented whether the multi-mode baseband unit is in the operating mode or the energy-saving mode.

In some implementations, the multi-mode baseband unit may be controlled to enter into the energy-saving mode or the operating mode by a main control unit in the multi-mode baseband unit.

In some implementations, the condition for energy-saving is satisfied in response to the AAU falling into deep sleep.

In some implementations, the operating condition is satisfied in response to the AAU waking from deep sleep.

In some implementations, controlling the multi-mode baseband unit in the AAU to enter into the energy-saving mode includes: powering off the multi-mode baseband unit in the AAU; and loading the first module in the multi-mode baseband unit.

In some implementations, controlling the multi-mode baseband unit to enter into the operating mode includes: loading a second module in the multi-mode baseband unit.

In some implementations, the first module includes: the clock reset management (CRM) subsystem, the NTL accelerator in the network layer accelerators and the optical interface module.

In some implementations, the second module includes: a digital signal processing (DSP) cluster subsystem, a double data rate (DDR) subsystem, a protocol conversion screening (PCS) subsystem, a physical layer accelerator, a network layer accelerator other than the NTL accelerator, and a system on a chip (SOC) system component.

In other words, during the multi-mode baseband unit being in the energy-saving mode, modules to be loaded include: the clock reset management (CRM) subsystem, and the NTL accelerator in the network layer accelerators and the optical interface module.

During the multi-mode baseband unit being in the operating mode, modules to be loaded include: the clock reset management (CRM) subsystem, the NTL accelerator in the network layer accelerators, the optical interface module, the DSP cluster subsystem, the DDR subsystem, the PCS subsystem, the physical layer accelerator, the network layer accelerator other than the NTL accelerator, and the SOC system component.

In some implementations, the physical layer accelerator includes at least one of: an antenna interface subsystem (ANTI) accelerator, a fast Fourier transform (FFT) accelerator, a massive MIMO transformation (MMT) accelerator, or a massive MIMO W-value (MMW) computation accelerator, or the like.

In some implementations, the network layer accelerator other than the NTL accelerator includes: an encryption/decryption accelerator.

In some implementations, the SOC system component includes: a direct memory access (DMA), a mass memory unit (MMU), and the like.

According to the method for controlling the base station provided in the embodiment of the present application, energy saving of the AAU, and energy saving of the remote radio unit and the multi-mode baseband unit in the AAU, can be simultaneously implemented, thereby allowing the normal communication between the AAU and the BBU and significantly reducing the power consumption of the AAU.

In a second aspect, referring to FIG. 2, an embodiment of the present application provides an electronic device, including: at least one processor 201; and a memory 202 having at least one computer program stored thereon, at least one computer program, when executed by the at least one processor 201, causes the at least one processor 201 to implement the method for controlling the base station as described above.

In some implementations, the electronic device further includes: at least one I/O interface 203 connected between the processor 201 and the memory 202, and configured to enable information interaction between the processor 201 and the memory 202.

In some implementations, the processor 201 is a device with a data processing capability, including but not limited to a central processing unit (CPU), or the like; the memory 202 is a device with a data storage capability, including but not limited to, a random access memory (RAM, more specifically SDRAM, DDR, etc.), a read-only memory (ROM), an electrically erasable programmable read-only memory (EEPROM) or a flash memory (FLASH); and the I/O interface (read/write interface) 203 is connected between the processor 201 and the memory 202 to enable information interaction between the processor 201 and the memory 202, and includes, but is not limited to, a data bus interface or the like.

In some implementations, the processor 201, the memory 202, and the I/O interface 203 are interconnected via a bus 204, and further connected to other components of a computing device.

In a third aspect, an embodiment of the present application provides a computer-readable storage medium having a computer program stored thereon, the computer program, when executed by a processor, causes the processor to implement the method for controlling the base station as described above.

Those of ordinary skill in the art will appreciate that all or some operations of the above described method, function modules/units in the system and apparatus may be implemented as software, firmware, hardware, and suitable combinations thereof. In a hardware implementation, the division between the function modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to those of ordinary skill in the art, the term computer storage medium includes volatile and nonvolatile, removable and non-removable media implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic memory, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made without departing from the scope of the present application as set forth in the appended claims.

## Claims

1. A method for controlling a base station, comprising:
shutting down, in response to a condition for energy-saving being satisfied, a remote radio unit in an active antenna unit in a base station, and controlling a multi-mode baseband unit in the active antenna unit to enter into an energy-saving mode, wherein after the multi-mode baseband unit enters the energy-saving mode, only a first module, for ensuring a normal communication between a building baseband unit and the active antenna unit, in the multi-mode baseband unit is loaded.

2. The method according to claim 1, further comprising:
after controlling the multi-mode baseband unit in the active antenna unit to enter into the energy-saving mode, controlling, in response to an operating condition being satisfied, the multi-mode baseband unit to enter into an operating mode, wherein after the multi-mode baseband unit enters the operating mode, all modules in the multi-mode baseband unit are loaded.

3. The method according to claim 2, wherein the operating condition comprises:
a current traffic volume of the base station being greater than or equal to a first preset threshold.

4. The method according to claim 2, wherein controlling the multi-mode baseband unit to enter into the operating mode comprises:
loading a second module in the multi-mode baseband unit.

5. The method according to claim 4, wherein the second module comprises:
a digital signal processing (DSP) cluster subsystem, a double data rate (DDR) subsystem, a protocol conversion screening (PCS) subsystem, a physical layer accelerator, a further network layer accelerator other than a network transport layer (NTL) accelerator, and a system on a chip (SOC) system component.

6. The method according to any one of claims 1 to 5, wherein controlling the multi-mode baseband unit in the active antenna unit to enter into the energy-saving mode comprises:
powering off the multi-mode baseband unit in the active antenna unit; and
loading the first module in the multi-mode baseband unit.

7. The method according to any one of claims 1 to 5, wherein the condition for energy-saving comprises:
a current traffic volume of the base station being less than or equal to a second preset threshold.

8. The method according to any one of claims 1 to 5, wherein the first module comprises:
a clock reset management (CRM) subsystem, a network transport layer (NTL) accelerator in the network layer accelerators and an optical interface module.

9. An electronic device, comprising:
at least one processor; and
a memory having at least one computer program stored thereon, the at least one computer program, when executed by the at least one processor, causes the at least one processor to implement the method according to any one of claims 1 to 8.

10. A computer-readable storage medium having a computer program stored thereon, the computer program, when executed by a processor, causes the processor to implement the method according to any one of claims 1 to 8.
